(19) **Europäisches Patentamt**
**European Patent Office**
**Office européen des brevets**

(11) **EP 4 708 137 A1**

(12) **EUROPEAN PATENT APPLICATION**

(43) Date of publication:
**11.03.2026 Bulletin 2026/11**

(21) Application number: **25204218.9**

(22) Date of filing: **24.09.2025**

(51) International Patent Classification (IPC):
*G06N 3/045* (2023.01)     *G06N 3/063* (2023.01)

(52) Cooperative Patent Classification (CPC):
**G06N 3/063; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.06.2025 CN 202510872700**

(71) Applicant: **XG TECH PTE. LTD.**
**Singapore 179098 (SG)**

(72) Inventors:
• **LIANG, Chengdong**
**179098 Singapore (SG)**
• **CHEN, Xiaoyu**
**179098 Singapore (SG)**

(74) Representative: **Dehns Germany Partnerschaft mbB**
**Theresienstraße 6-8**
**80333 München (DE)**

(54) **LARGE LANGUAGE MODEL-BASED INFERENCE ACCELERATION METHOD AND APPARATUS, MEDIUM, AND DEVICE**

(57)     A large language model (LLM)-based inference acceleration method and apparatus, a medium, and a device are disclosed. The method includes: determining (201) LLMs deployed on a plurality of first hardware accelerators, multiple submodels obtained through segmenting the LLMs and respectively deployed on a plurality of second hardware accelerators, and input data of a to-be-executed task; performing (202) first processing on the input data through the plurality of LLMs to obtain a first processing result; performing (203) second processing on the first processing result through the multiple submodels to obtain a second processing result; and determining (204) an execution result of the to-be-executed task in response to the second processing result meeting a stop inference condition.

FIG. 2

## Description

## TECHNICAL FIELD

The present disclosure relates to the technical field of deep learning, and in particular, to a large language model (LLM)-based inference acceleration method and apparatus, a medium, and a device.

## BACKGROUND

An LLM is a deep learning model trained with a large amount of text data. The LLM may be used to perform simple language tasks such as spell checking and grammar correction, and may also tackle complex tasks such as text summarization, machine translation, sentiment analysis, dialogue generation, and content recommendation, and generating high-quality and coherent text. However, as a size of the model continues to increase, enormous computational demands result in an increasingly longer inference time of the model, adversely affecting task execution efficiency.

## SUMMARY

To resolve the above technical problem, the present disclosure provides an LLM-based inference acceleration method and apparatus, a medium, and a device, to shorten an inference time of an LLM and improve task execution efficiency.

According to one aspect, there is provided an LLM-based inference acceleration method, including:

determining LLMs deployed on a plurality of first hardware accelerators, multiple submodels obtained through segmenting the LLMs and respectively deployed on a plurality of second hardware accelerators, and input data of a to-be-executed task;

performing first processing on the input data through the plurality of LLMs to obtain a first processing result;

performing second processing on the first processing result through the multiple submodels to obtain a second processing result; and

determining an execution result of the to-be-executed task in response to the second processing result meeting a stop inference condition.

According to another aspect, there is provided an LLM-based inference acceleration apparatus, including:

a first determination module, configured for determining LLMs deployed on a plurality of first hardware accelerators, multiple submodels obtained through segmenting the LLMs and respectively deployed on a plurality of second hardware accelerators, and input data of a to-be-executed task;

a first processing module, configured for performing first processing on the input data through the plurality of LLMs to obtain a first processing result;

a second processing module, configured for performing second processing on the first processing result through the multiple submodels to obtain a second processing result; and

a second determination module, configured for determining an execution result of the to-be-executed task in response to the second processing result meeting a stop inference condition.

According to still another aspect, there is provided a computer program product, where when instructions in the computer program product are executed by a processor, the LLM-based inference acceleration method provided above in the embodiments of the present disclosure is performed.

According to yet another aspect, there is provided an electronic device, including: a processor; and a memory, configured for storing instructions executable by the processor, where the processor is configured for reading the executable instructions from the memory and executing the instructions to implement the LLM-based inference acceleration method described above.

According to the LLM-based inference acceleration method provided in the embodiments of the present disclosure, LLMs deployed on a plurality of first hardware accelerators, multiple submodels obtained through segmenting the LLMs and respectively deployed on a plurality of second hardware accelerators, and input data of a to-be-executed task may be determined. Because first processing may be performed on the input data through the plurality of LLMs to obtain a first processing result, and second processing may be performed on the first processing result through the multiple submodels to obtain a second processing result, an execution result of the to-be-executed task may be determined when the second processing result meets a stop inference condition. In the solution of the embodiments of the present disclosure, because input data may be segmented at a prefilling stage to obtain multiple subdata and the multiple subdata may are processed in parallel through a plurality of hardware accelerators to obtain data for decoding, it is possible that a processing speed of a model for prefilling the input data may be increased. At a decoding stage, the model is segmented, and the data for decoding is processed in parallel through submodels of the plurality of hardware accelerators, so that a decoding speed for the data for decoding may be further increased. In this way, according to the solution, staged hybrid acceleration is performed through data parallelism and model parallelism, so that inference efficiency of LLMs at all stages may be improved, thereby achieving an effect of shortening a consumed time and improving task execution efficiency.

## BRIEF DESCRIPTION OF DRAWINGS

FIG. 1 is a schematic diagram illustrating an LLM-based inference acceleration system according to an exemplary embodiment of the present disclosure.

FIG. 2 is a schematic flowchart illustrating an LLM-based inference acceleration method according to an exemplary embodiment of the present disclosure.

FIG. 3 is a schematic flowchart illustrating an LLM-based inference acceleration method according to another exemplary embodiment of the present disclosure.

FIG. 4 is a schematic diagram illustrating prefilling processing of an LLM according to an exemplary embodiment of the present disclosure.

FIG. 5 is a schematic flowchart illustrating an LLM-based inference acceleration method according to still another exemplary embodiment of the present disclosure.

FIG. 6 is a schematic diagram illustrating an operation process in a parallel splitting case according to an exemplary embodiment of the present disclosure.

FIG. 7 is a schematic diagram illustrating an operation process in a non-parallel splitting case according to an exemplary embodiment of the present disclosure.

FIG. 8 is a schematic diagram illustrating decoding processing of an LLM according to an exemplary embodiment of the present disclosure.

FIG. 9 is a schematic flowchart illustrating an LLM-based inference acceleration method according to yet another exemplary embodiment of the present disclosure.

FIG. 10 is a schematic diagram illustrating a structure of an LLM-based inference acceleration apparatus according to an exemplary embodiment of the present disclosure.

FIG. 11 is a diagram illustrating a structure of an electronic device according to an exemplary embodiment of the present disclosure.

## DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

Overview of Application

An LLM has a large number of parameters and high computational demands, and significant computational amount challenges are faced when the LLM is used for performing inference tasks. As the LLM becomes increasingly larger in size, its large amount of computation causes model inference to take an increasingly longer time, thus adversely affecting task execution efficiency.

In view of the above technical problem, according to an LLM-based inference acceleration method provided in the embodiments of the present disclosure, LLMs deployed on a plurality of first hardware accelerators, multiple submodels obtained through segmenting the LLMs and respectively deployed on a plurality of second hardware accelerators, and input data of a to-be-executed task may be determined. Because first processing may be performed on the input data through the plurality of LLMs to obtain a first processing result, and second processing may be performed on the first processing result through the multiple submodels to obtain a second processing result, an execution result of the to-be-executed task may be determined when the second processing result meets a stop inference condition. In the solution of the embodiments of the present disclosure, because input data is segmented at a prefilling stage to obtain multiple subdata and the multiple subdata are processed in parallel through a plurality of hardware accelerators to obtain data for decoding, a processing speed of a model for prefilling the input data may be increased. At a decoding stage, the model is segmented, and the data for decoding is processed in parallel through submodels of the plurality of hardware accelerators, so that a decoding speed for the data for decoding may be further increased. In this way, according to the solution, staged hybrid acceleration is performed through data parallelism and model parallelism, so that inference efficiency of LLMs at all stages may be improved, thereby achieving an effect of shortening a consumed time and improving task execution efficiency.

Exemplary System

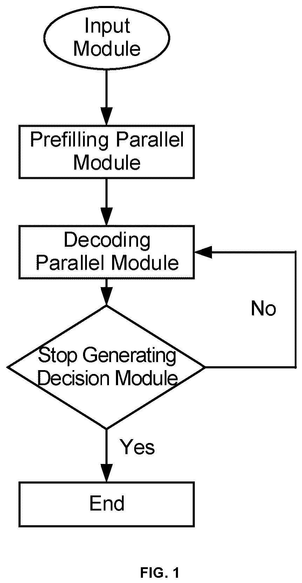

FIG. 1 is a schematic diagram illustrating an LLM-based inference acceleration system according to an exemplary embodiment of the present disclosure.

Exemplarily, as shown in FIG. 1, the inference acceleration system includes an input module, a prefilling parallel module, a decoding parallel module, and a stop generating decision module.

Exemplarily, the input module may be configured for inputting input data of a to-be-executed task.

In some embodiments, the inference acceleration system may further include a plurality of first hardware accelerators, on which LLMs are respectively deployed. The prefilling parallel module may be configured for calling the plurality of first hardware accelerators, and performing prefilling processing on the input data based on the plurality of LLMs deployed on the plurality of first hardware accelerators to obtain a first processing result.

In some examples, the encoding processing may be performed on the input data to obtain an input sequence; and the input sequence is split based on a number of the first hardware accelerators to obtain multiple subsequences equal in number to the first hardware accelerators. Then, parallel prefilling processing is performed on the multiple subsequences through the plurality of first hardware accelerators to obtain a first processing result.

In some embodiments, the inference acceleration system may further include a plurality of second hardware accelerators, on which submodels obtained through segmenting the LLMs are respectively deployed. The decoding parallel module may be configured for calling the plurality of second hardware accelerators, and performing decoding processing on the first processing result based on the multiple submodels deployed on the plurality of second hardware accelerators to obtain a second processing result.

In some embodiments, the stop generating decision module may be configured for determining whether the second processing result meets a stop inference condition, and if yes, that is, in response to the second processing result meeting the stop inference condition, an execution result of the to-be-executed task is determined; and then, ending the inference task of the LLMs; and on the contrary, if no, that is, in response to the second processing result not meeting the stop inference condition, the decoding parallel module may continue to call the plurality of second hardware accelerators to perform decoding, until an obtained second processing result meets the stop inference condition.

For a specific implementation of parallel prefilling processing and decoding processing in the above embodiment, refer to the detailed description below in the embodiment of the method, description of which is not repeated herein in the embodiments of the present disclosure.

In the solution of this embodiment of the present disclosure, because input data is segmented at a prefilling stage to obtain multiple subdata and the multiple subdata are processed in parallel through a plurality of hardware accelerators to obtain data for decoding, a processing speed of a model for prefilling the input data may be increased. At a decoding stage, the model is segmented, and the data for decoding is processed in parallel through submodels of the plurality of hardware accelerators, so that a decoding speed for the data for decoding may be further increased. In this way, according to the solution, staged hybrid acceleration is performed through data parallelism and model parallelism, so that inference efficiency of LLMs at all stages may be improved, thereby achieving an effect of shortening a consumed time and improving task execution efficiency.

Exemplary Method

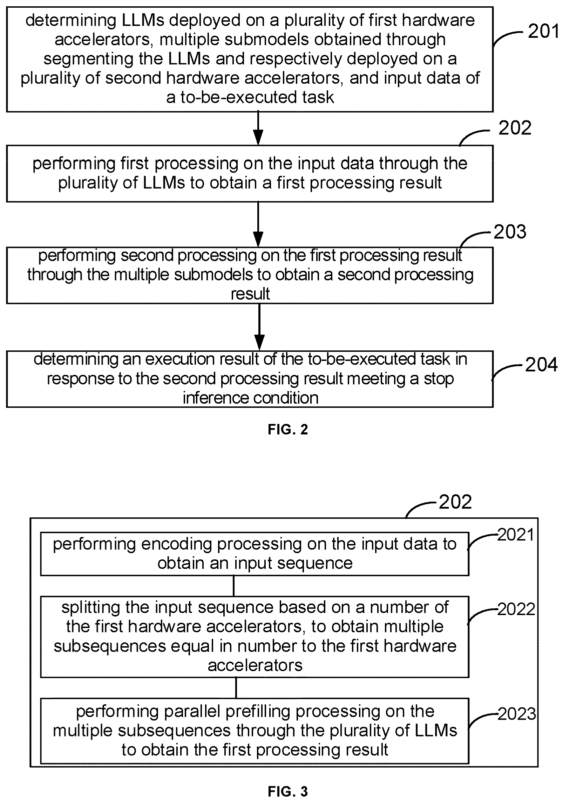

FIG. 2 is a schematic flowchart illustrating an LLM-based inference acceleration method according to an exemplary embodiment of the present disclosure.

Exemplarily, this embodiment may be applied to an electronic device. As shown in FIG. 2, the method may include steps:

Step 201: Determining LLMs deployed on a plurality of first hardware accelerators, multiple submodels obtained through segmenting the LLMs and respectively deployed on a plurality of second hardware accelerators, and input data of a to-be-executed task.

In some embodiments, the first hardware accelerators may be various types of hardware accelerators. The first hardware accelerators may include any one of central processing units (CPUs), graphics processing units (GPUs), neural processing units (NPUs), or another type of hardware accelerators. The plurality of first hardware accelerators are of a same type. For example, the plurality of first hardware accelerators are all GPUs.

In some embodiments, the second hardware accelerators may be various types of hardware accelerators. The second hardware accelerators may include any one of CPUs, GPUs, NPUs, or another type of hardware accelerators. The plurality of second hardware accelerators are of a same type. For example, the plurality of second hardware accelerators are all CPUs.

In some embodiments, the plurality of second hardware accelerators may be a plurality of first hardware accelerators; or the plurality of second hardware accelerators are hardware accelerators other than the plurality of first hardware accelerators. In this case, the second hardware accelerators and the first hardware accelerators may be hardware accelerators of a same type, or hardware accelerators of different types.

In some embodiments, complete LLMs are respectively deployed on the plurality of first hardware accelerators, and the LLMs on all of the first hardware accelerators have same configuration parameters. The complete LLMs are segmented into multiple submodels, and the multiple submodels are respectively deployed on the plurality of second hardware accelerators, where each of the second hardware accelerators corresponds to one of the multiple submodels. The LLM is a natural language processing model based on deep learning and trained with a large amount of text data.

In some embodiments, different to-be-executed tasks correspond to different input data, and the input data may be a prompt. Exemplarily, when the to-be-executed task is a navigation task, the input data is a prompt corresponding to the navigation task; when the to-be-executed task is a vehicle-control task, the input data is a prompt corresponding to the vehicle-control task; when the to-be-executed task is an entertainment task, the input data is a prompt corresponding to the entertainment task; and when the to-be-executed task is a query task, the input data is a prompt corresponding to the query task.

For example, the to-be-executed task is a weather query task, and the input data is a prompt "What is the weather like in Beijing today".

Step 202: Performing first processing on the input data through the plurality of LLMs to obtain a first processing result.

In some embodiments, part of the input data is processed through any one of the plurality of LLMs to obtain a processing sub-result, so that first processing may be performed on the input data through the plurality of LLMs to obtain a plurality of processing sub-results, and the first processing result is determined based on the plurality of processing sub-results. For details, refer to the detailed description in the embodiment below, description of which is not repeated herein in the embodiments of the present disclosure.

Step 203: Performing second processing on the first processing result through the multiple submodels to obtain a second processing result.

In some embodiments, the performing second processing on the first processing result through the multiple submodels refers to performing parallel decoding processing on the first processing result through the multiple submodels, an obtained decoding result being used as the second processing result.

Step 204: Determining an execution result of the to-be-executed task in response to the second processing result meeting a stop inference condition.

In some examples, the stop inference condition may include any one of a length of the second processing result being greater than or equal to a preset length, and a stop symbol being detected.

When the second processing result meets the stop inference condition, the second processing result may be determined as the execution result of the to-be-executed task.

According to the LLM-based inference acceleration method provided in this embodiment of the present disclosure, LLMs deployed on a plurality of first hardware accelerators, multiple submodels obtained through segmenting the LLMs and respectively deployed on a plurality of second hardware accelerators, and input data of a to-be-executed task may be determined. Because first processing may be performed on the input data through the plurality of LLMs to obtain a first processing result, and second processing may be performed on the first processing result through the multiple submodels to obtain a second processing result, an execution result of the to-be-executed task may be determined when the second processing result meets a stop inference condition. In the solution of this embodiment of the present disclosure, because input data is segmented at a prefilling stage to obtain multiple subdata and the multiple subdata in parallel are processed through a plurality of hardware accelerators to obtain data for decoding, a processing speed of a model for prefilling the input data may be increased. At a decoding stage, the model is segmented, and the data for decoding is processed in parallel through submodels of the plurality of hardware accelerators, so that a decoding speed for the data for decoding may be further increased. In this way, according to the solution, staged hybrid acceleration is performed through data parallelism and model parallelism, so that acceleration of large model inference at all stages is implemented, and inference efficiency of LLMs at all stages may be improved, thereby achieving an effect of shortening a consumed time and improving task execution efficiency.

FIG. 3 is a schematic flowchart illustrating an LLM-based inference acceleration method according to another exemplary embodiment of the present disclosure.

In some embodiments, as shown in FIG. 3, step 202 may include steps:

Step 2021: Performing encoding processing on the input data to obtain an input sequence.

In some examples, the performing encoding processing on the input data refers to converting the input data into an understandable numerical sequence, that is, the input sequence. Different types of input data correspond to different encoding processing methods.

Exemplarily, that the input data is text-type data is used as an example, and the encoding processing method may include data preprocessing, tokenizing, encoding mapping, and padding and truncating.

Step 2022: Splitting the input sequence based on a number of the first hardware accelerators, to obtain multiple subsequences equal in number to the first hardware accelerators.

In some examples, a length of the input sequence may be determined first and the number of the first hardware accelerators is determined. The input sequence is split according to a particular splitting strategy based on the length of the input sequence and the number of the first hardware accelerators to obtain multiple subsequences, each of which may include at least one semantic unit. Lengths of any two of the multiple subsequences may be the same or different, which is not limited in the embodiments of the present disclosure.

Exemplarily, it is assumed that the length of the input sequence is L, and the number of the first hardware accelerators is N. The input sequence is split by equal split based on the length L to obtain N subsequences. Certainly, the input sequence may alternatively be split by non-equal split to obtain multiple subsequences.

Step 2023: Performing parallel prefilling processing on the multiple subsequences through the plurality of LLMs to obtain the first processing result.

In some embodiments, through inputting the multiple subsequences into the corresponding LLMs, respectively, prefilling processing is performed simultaneously on the multiple subsequences based on the plurality of LLMs by using parallel computing capabilities of the plurality of first hardware accelerators. After the LLMs complete the prefilling of the corresponding subsequences, corresponding output results may be obtained, and the output results corresponding to the LLMs are combined in a sequential order of the multiple subsequences to obtain the first processing result. For a detailed description of performing parallel prefilling processing on the multiple subsequences through the plurality of LLMs, refer to the specific description in the embodiment below, description of which is not repeated herein in the embodiments of the present disclosure.

In some embodiments, step 2023 may specifically include step 2023a to 2023c:

Step 2023a: Performing prefilling processing on a first subsequence among the multiple subsequences sequentially through a plurality of structural layers included in the LLM deployed on a third hardware accelerator, to obtain a first output result and KV (Key-Value) pairs of the respective structural layers corresponding to the first subsequence.

The third hardware accelerator is any one of the plurality of first hardware accelerators.

In some examples, the KV pair may include a Key vector and a Value vector. After the KV pair is obtained, the KV pair may be stored in a memory, and may be referred to as a KV cache.

In some embodiments, the first subsequence is the 1st one among the multiple subsequences. Prefilling processing is performed on the first subsequence sequentially through the plurality of structural layers included in the LLM deployed on the third hardware accelerator, and a KV pair is obtained based on each of the structural layers; and the first subsequence is processed through the LLM running on the third hardware accelerator to obtain a first processing result, that is, a KV pair obtained after the first subsequence is processed based on the 1st one among the plurality of structural layers included in the LLM, the KV pair is input to the 2nd one among the plurality of structural layers, and so on, until the KV pair is input to the last one among the plurality of structural layers, and a result is output. In other words, the output result of the last one among the plurality of structural layers is the first output result.

Step 2023b: Performing, through a plurality of structural layers included in the LLM deployed on a fourth hardware accelerator, prefilling processing on a second subsequence among the multiple subsequences and KV pairs of the respective structural layers corresponding to a previous subsequence for the second subsequence, to obtain a second output result and KV pairs of the respective structural layers corresponding to the second subsequence.

The fourth hardware accelerator is any one of the plurality of first hardware accelerators, which has not performed prefilling processing operation, and the second subsequence is any one of the multiple subsequences other than the first subsequence.

In some examples, the second subsequence is any one of the multiple subsequences other than the 1st subsequence. For example, the second subsequence is the 2nd subsequence. For another example, the second subsequence is the 4th subsequence.

In some embodiments, an input of each of structural layers included in an LLM on any fourth hardware accelerator includes a second subsequence among multiple subsequences and a KV pair of each structural layer corresponding to a previous subsequence for the second subsequence. For a specific implementation of performing prefilling processing on the second subsequence among the multiple subsequences and the KV pair of each structural layer corresponding to the previous subsequence for the second subsequence, refer to the detailed description in the embodiment below, description of which is not repeated herein in the embodiments of the present disclosure.

In some embodiments, step 2023b may specifically include: performing, through a first structural layer among the plurality of structural layers included in the LLM deployed on the fourth hardware accelerator, prefilling processing on the second subsequence and a KV pair of a first structural layer corresponding to the previous subsequence for the second subsequence, to obtain an output sub-result of the first structural layer corresponding to the fourth hardware accelerator and a KV pair of the first structural layer corresponding to the second subsequence; performing, through a second structural layer among the plurality of structural layers included in the LLM deployed on the fourth hardware accelerator, prefilling processing on an output sub-result of a previous structural layer for the second structural layer and a KV pair of a structural layer corresponding to the previous subsequence for the second subsequence, to obtain an output sub-result of the second structural layer and a KV pair of the second structural layer, where the second structural layer is any one of the plurality of structural layers included in the LLM deployed on the fourth hardware accelerator other than the first structural layer corresponding to the fourth hardware accelerator; and determining the second output result based on an output sub-result of a last structural layer among the plurality of structural layers included in the LLM deployed on the fourth hardware accelerator.

In this embodiment, after the output sub-result of the last one among the plurality of structural layers included in the LLM on the fourth hardware accelerator is determined, the output sub-result is determined as the second output result.

In some examples, it is assumed that N hardware accelerators are included, an LLM deployed on each of the hardware accelerators includes m structural layers, the multiple subsequences include M subsequences, and the fourth hardware accelerator may be represented by an $i^{th}$ hardware accelerator, i being greater than or equal to 2 and less than or equal to N. Prefilling processing is performed, through m structural layers of an LLM deployed on the $i^{th}$ hardware accelerator, on a $j^{th}$ subsequence and KV pairs ($KV^{(j-1)1}$ to $KV^{(j-1)m}$) of all structural layers corresponding to a previous subsequence for the $j^{th}$ subsequence, to obtain a second output result corresponding to the $j^{th}$ subsequence and KV pairs ($KV^{j1}$ to $KV^{jm}$) of all structural layers corresponding to the $j^{th}$ subsequence, where j is greater than or equal to 2 and less than or equal to M.

When prefilling processing is performed, through the m structural layers included in the LLM deployed on the $i^{th}$ hardware accelerator, on the $j^{th}$ subsequence and the KV pairs ($KV^{(j-1)1}$ to $KV^{(j-1)m}$) of all the structural layers corresponding to the previous subsequence (a $(j-1)^{th}$ subsequence) for the $j^{th}$ subsequence, the following contents may be specifically included:

for the $1^{st}$ structural layer among the m structural layers: performing, through the $1^{st}$ structural layer, prefilling processing on the $j^{th}$ subsequence and the $1^{st}$ KV pair $KV^{(j-1)1}$ corresponding to the $(j-1)^{th}$ subsequence to obtain a first output sub-result $O^{j1}$ and a KV pair $KV^{j1}$; and

for an $f^{th}$ structural layer: performing, through the $f^{th}$ structural layer, prefilling processing on an output sub-result $O^{j(f-1)}$ of an $(f-1)^{th}$ structural layer and an $f^{th}$ KV pair $KV^{(j-1)f}$ corresponding to the $(j-1)^{th}$ subsequence to obtain an output sub-result $O^{jf}$ and a KV pair $KV^{jf}$ of the $f^{th}$ structural layer, where f=2, 3, ..., m; and

an output sub-result $O^{jm}$ of the last structural layer (that is, the $(f=m)^{th}$ structural layer) is a second output result $O^{jm}$.

Based on the above embodiment, the plurality of structural layers included in the LLM deployed on any one of the plurality of first hardware accelerators may all output KV pairs, and the KV pairs corresponding to the respective structural layers may be input to structural layers of an LLM deployed on a next hardware accelerator. Therefore, the plurality of structural layers included in the LLM deployed on the next hardware accelerator are used for performing prefilling processing on a certain subsequence among the input sequence and a KV pair output by each structural layer corresponding to a previous subsequence for the subsequence. In other words, when parallel prefilling processing is performed on multiple subsequences through the plurality of first hardware accelerators, contexts of the respective subsequences may be connected, which enable an accurate understanding of complete semantics of the input data, avoiding a semantic discontinuity problem caused by segmentation of the input sequence. This not only may improve a processing speed of the prefilling processing of the input data, but also may improve accuracy of the obtained first processing result.

Step 2023c: Determining the first processing result based on the first output result and the second output result.

In some examples, it is assumed that the multiple subsequences include M subsequences, where M is an integer greater than or equal to 2; and the first output result is an output result corresponding to the $1^{st}$ one among the M subsequences. Because any one among M-1 subsequences corresponds to one second output result, M-1 second output results may be obtained. In this way, the first output result and the M-1 second output results may be combined in an arrangement order of the M subsequences to obtain the first processing result.

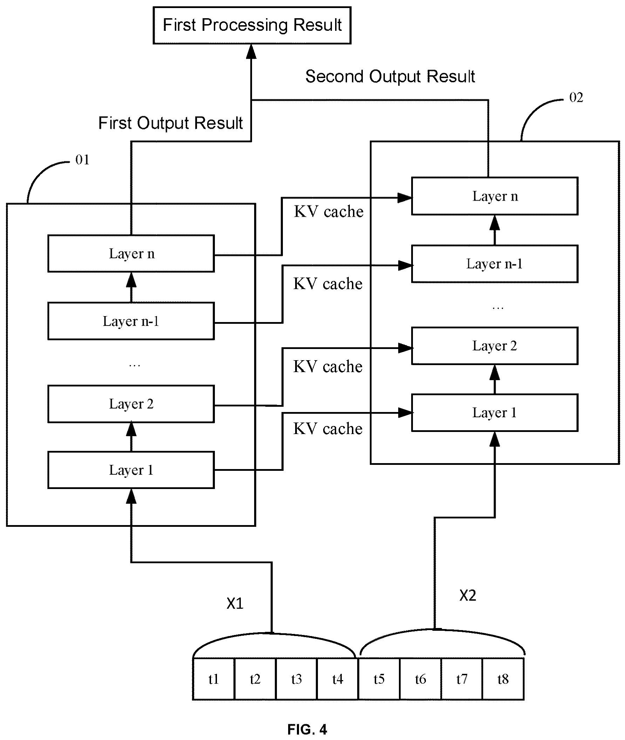

FIG. 4 is a schematic diagram illustrating prefilling processing of an LLM according to an exemplary embodiment of the present disclosure. As shown in FIG. 4, first hardware accelerators include a hardware accelerator 01 and a hardware accelerator 02, and complete LLMs respectively deployed on the hardware accelerator 01 and the hardware accelerator 02 each include n structural layers (Layer 1 to Layer n); and multiple subsequences corresponding to input data include the $1^{st}$ subsequence X1 including semantic units t1 to t4 and the $2^{nd}$ subsequence X2 including semantic units t5 to t8. Prefilling processing is performed on the $1^{st}$ subsequence X1 through the hardware accelerator 01 to obtain a first output result and a KV pair KV cache of each structural layer corresponding to the $1^{st}$ subsequence X1. The KV pair KV cache of each structural layer corresponding to the $1^{st}$ subsequence X1 is transmitted to each of the structural layers corresponding to the LLM on the hardware accelerator 02, and then, prefilling processing is performed, through the hardware accelerator 02, on the $2^{nd}$ subsequence X2 and the KV pair KV cache of each structural layer corresponding to the $1^{st}$ subsequence X1 to obtain a second output result and a KV pair KV cache of each structural layer corresponding to the $2^{nd}$ subsequence X2. The first output result and the second output result are combined in a sequential order of the $1^{st}$ subsequence X1 and the $2^{nd}$ subsequence X2 to obtain a first processing result.

According to the LLM-based inference acceleration method provided in the embodiments of the present disclosure, the encoding processing may be performed on input data first to obtain an input sequence, the input sequence is split based on a number of first hardware accelerators to obtain multiple subsequences, and then, the parallel prefilling processing is performed on the multiple subsequences through a plurality of LLMs to obtain a first processing result. According to the solution, because parallel prefilling processing may be performed on the multiple subsequences through the plurality of LLMs, a processing speed at which the models perform prefilling processing on the input data is increased. In this way, the processing time of the prefilling processing stage is shortened, thus shortening an inference time of the LLM, thereby improving inference efficiency of the LLM.

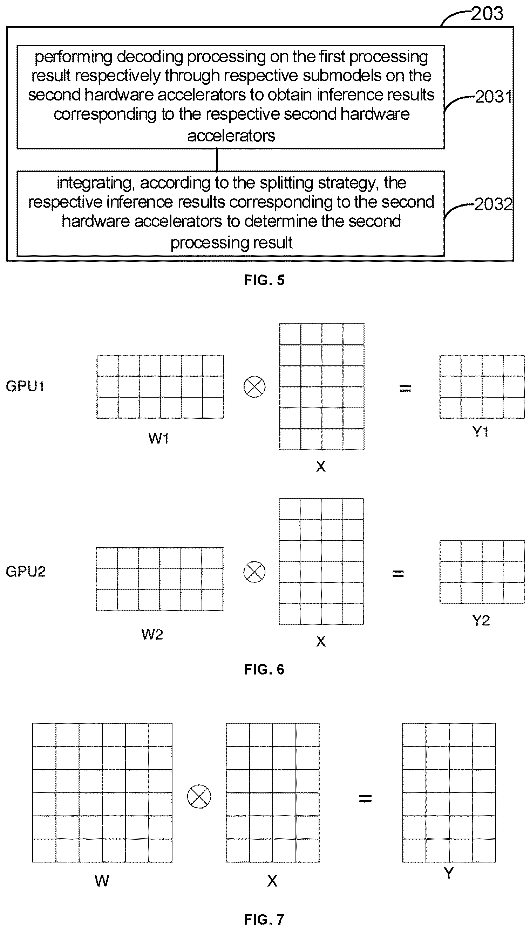

FIG. 5 is a schematic flowchart illustrating an LLM-based inference acceleration method according to still another exemplary embodiment of the present disclosure.

In some embodiments, the multiple submodels respectively deployed on the plurality of second hardware accelerators are obtained by splitting a weight matrix of the LLMs according to a splitting strategy. As shown in FIG. 5, correspondingly, the step 203 may specifically include steps:

Step 2031: Performing decoding processing on the first processing result respectively through respective submodels on the second hardware accelerators to obtain inference results corresponding to the respective second hardware accelerators.

In some embodiments, the splitting strategy may include two splitting strategies: a non-parallel splitting strategy and a parallel splitting strategy. The non-parallel splitting strategy is a special case of the parallel splitting strategy. The parallel splitting strategy refers to splitting a weight matrix of each of the plurality of structural layers included in the LLM to obtain multiple submodels, and then deploying each of the submodels on each of the second hardware accelerators, where a weight matrix of each of a plurality of structural layers included in each of the submodels is not 0. When a weight matrix of each structural layer among a plurality of structural layers included in only one submodel is not 0, the parallel splitting strategy is actually a non-parallel splitting strategy in this case.

In some embodiments, during the splitting of the weight matrix of each of the plurality of structural layers included in the LLM, splitting proportions of the respective layers may be the same or different, and a weight matrix of each layer may or may not be equally split, which is not limited in the embodiments of the present disclosure.

Exemplarily, FIG. 6 shows an operation process in a parallel splitting case, two GPUs being taken as an example. The LLM includes $l$ number of structural layers, and a $j$th weight $W$ in a $l$th layer is split into $[w^1 \ w^2]$, where $w^1$ is deployed on GPU 1, $w^2$ is deployed on GPU 2, an input X (that is, the first output result) is transmitted to both GPU 1 and GPU 2, and calculation results of the two hardware accelerators are aggregated to obtain an output, by formulas expressed as follows:

Initializing, and splitting $W$: $W = [w^1 \ w^2]$

GPU 1 and GPU 2 performing operations in parallel:

$$\begin{cases} y_1 = w^1 * X \\ y_2 = w^2 * X \end{cases}$$

When aggregating results, data results of the hardware accelerators are combined: $Y = \begin{bmatrix} y_1 \\ y_2 \end{bmatrix}$

Exemplarily, FIG. 7 shows an operation process in a non-parallel splitting case, and a calculation formula in this case is expressed as follows:

$$y = w * X$$

In some embodiments, parallel prefilling processing is performed on multiple subsequences through a plurality of LLMs to obtain a first processing result, the first processing result is separately transmitted to a plurality of second hardware accelerators, and decoding processing is performed on a same input (that is, the first processing result) through a submodel on each of the second hardware accelerators to output each inference result. For a specific decoding process, refer to the detailed description in the embodiment below, description of which is not repeated herein in the embodiments of the present disclosure.

In some embodiments, step 2031 may specifically include: performing decoding processing on the first processing result through a third structural layer among a plurality of structural layers included in the submodel deployed on each of the second hardware accelerators, to obtain an output result of the third structural layer corresponding to each of the second hardware accelerators; performing decoding processing, through a fourth structural layer among the plurality of structural layers included in the submodel deployed on each of the second hardware accelerators, on an output result of a previous structural layer for the fourth structural layer corresponding to each of the second hardware accelerators, to obtain an output result of the fourth structural layer corresponding to each of the second hardware accelerators, where the fourth structural layer is any one of the plurality of structural layers included in the submodel other than the third structural layer; and determining the inference results corresponding to the respective second hardware accelerators based on output results of last structural layers among the plurality of structural layers included in the respective submodels deployed on the respective second hardware accelerator.

In some examples, the third structural layer is the 1st one among the plurality of structural layers included in the submodel on each of the second hardware accelerators, and the fourth structural layer may be any one of the plurality of structural layers included in the submodel, other than the 1st structural layer. For example, the fourth structural layer is the 2nd structural layer in the plurality of structural layers included in the submodel.

In some embodiments, because the submodels on the second hardware accelerators may maintain all-to-all communication between each other, a fourth structural layer among a plurality of structural layers included in a submodel on any second hardware accelerator may obtain an output result of a previous structural layer for a fourth structural layer corresponding to each of the other second hardware accelerators and an output result of a previous structural layer for the fourth structural layer in the submodel on the any second hardware accelerator, and use the output results as an input of the fourth structural layer. In this way, an output result of the fourth structural layer may continue to be transferred to a next structural layer for the fourth structural layer corresponding to each of the second hardware accelerators, and so on, until the last structural layer of the submodel on each of the second hardware accelerators, to obtain an output result of the last structural layer of the submodel on each of the second hardware accelerators.

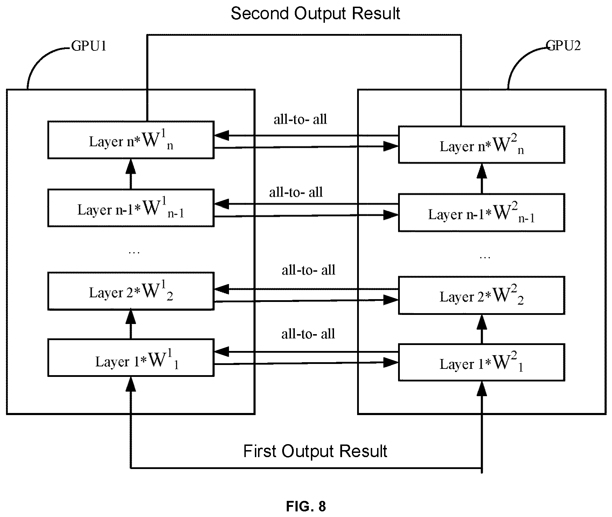

Exemplarily, FIG. 8 is a schematic diagram illustrating decoding processing of an LLM according to an exemplary embodiment of the present disclosure. As shown in FIG. 8, second hardware accelerators include GPU 1 and GPU 2. An LLM includes n number of structural layers (Layer 1 to Layer n), and a weight matrix W of each of the structural layers is split into $W^1_i$ and $W^2_i$ according to a parallel splitting policy, where i is greater than or equal to 1 and less than or equal to n. To be specific, $W^1_i$ represents a weight of each structural layer in a submodel on GPU 1, and $W^2_i$ represents a weight of each structural layer in a submodel on GPU 2. After a first output result is input to each of GPU 1 and GPU 2, the 1st structural layer in the submodel on GPU 1 performs decoding processing on the first processing result, and the 1st structural layer in the submodel on GPU 2 performs decoding processing on the first processing result. Therefore, output results of the respective 1st structural layers of GPU 1 and GPU 2 may be obtained. The respective 1st structural layers of GPU 1 and GPU 2 transmit their output results to each other, and then, decoding processing is respectively performed on the output results of the 1st structural layers included in the submodels on GPU 1 and GPU 2 through the 2nd structural layers included in the submodels on GPU 1 and GPU 2. The above steps are repeated until output results of the respective last structural layers of GPU 1 and GPU 2 are obtained, that is, the output results of the respective last structural layers of GPU 1 and GPU 2 are inference results corresponding to GPU 1 and GPU 2. A second output result is obtained based on the inference results respectively corresponding to GPU 1 and GPU 2.

Based on the above embodiment, after the 1st one among the plurality of structural layers included in the submodel on each of the second hardware accelerators processes the first processing result to obtain the output result, because the fourth structural layer among the plurality of structural layers included in the submodel on each of the second hardware accelerators may use, as an input, an output result of a previous structural layer for the fourth structural layer corresponding to each of the other second hardware accelerators and an output result of a previous structural layer for the fourth structural layer of the submodel, inputs of all the structural layers of the submodels on all of the second hardware accelerators are the same, that is, being a complete output result of a previous layer, resolving a problem of data dependency due to weight allocation and avoiding a problem of sematic deviation when other device data is missing. In this way, not only a speed of decoding processing may be increased, but also sematic integrity and consistency during the processing are ensured.

Step 2032: Integrating, according to the splitting strategy, the respective inference results corresponding to the second hardware accelerators to determine the second processing result.

In an example, it is taken as an example that two second hardware accelerators are included and the weight matrix is a 6x6 matrix. Assuming that a weight matrix of each structural layer of the LLM is split to first three rows and last three rows, after each of the second hardware accelerators separately outputs a respective inference result, an inference result corresponding to the first three rows and an inference result corresponding to the last three rows may be spliced row by row to obtain the second processing result.

According to the technical solution provided in the embodiments of the present disclosure, when multiple submodels respectively deployed on a plurality of second hardware accelerators are obtained by splitting a weight matrix of an LLM according to a splitting strategy, because decoding processing on may be performed on a first processing result respectively through respective submodels on the second hardware accelerators to obtain inference results corresponding to the respective second hardware accelerators, integrating, according to the splitting strategy, the inference results corresponding to all of the second hardware accelerators may obtain a second processing result. Because the LLM is large in scale, multiple submodels that are small in scale may be obtained after the weight matrix of the LLM is split according to the splitting strategy, allowing the decoding processing on of the first processing result to be accelerated through the submodel that is small in scale on each of the second hardware accelerators, thereby shortening a time of the decoding processing. In this way, inference efficiency of the model is greatly improved by increasing a speed at a decoding stage during model inference.

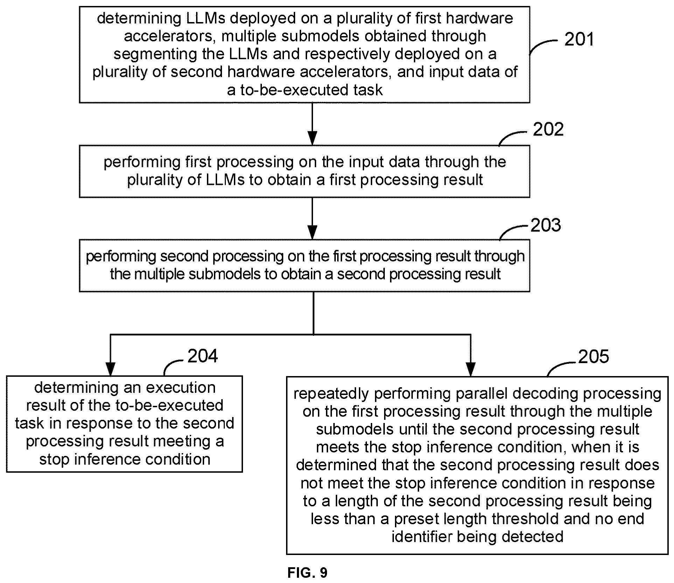

Based on FIG. 2 above, FIG. 9 is a schematic flowchart illustrating an LLM-based inference acceleration method according to yet another exemplary embodiment of the present disclosure.

In some embodiments, as shown in FIG. 9, the LLM-based inference acceleration method according to this embodiment of the present disclosure may further include step:

Step 205: repeatedly performing parallel decoding processing on the first processing result through the multiple submodels until the second processing result meets the stop inference condition, when it is determined that the second processing result does not meet the stop inference condition in response to a length of the second processing result being less than a preset length threshold and no end identifier being detected.

In some embodiments, the preset length threshold may include a plurality of length sub-thresholds, and each length sub-threshold corresponds to a different to-be-executed task. In addition, the preset length threshold may alternatively be adaptively adjusted as needed. For a description of the stop inference condition, refer to the detailed description in the embodiment above, description of which is not repeated herein in the embodiments of the present disclosure.

When the length of the second processing result is less than the preset length threshold and no end identifier is detected, it indicates that the second processing result is not complete enough in semantics or the model is still thinking, and the decoding processing task for the first processing result is not terminated. Therefore, no end identifier is output. In other words, the second processing result does not meet the stop inference condition. In this case, parallel decoding processing may be performed repeatedly on the first processing result through the multiple submodels until the second processing result meets the stop inference condition. In this way, semantic integrity of the obtained second processing result may be ensured.

According to the technical solution provided in this embodiment of the present disclosure, in a case that the length of the second processing result is less than the preset length threshold and no end identifier is detected, it may be determined that the second processing result does not meet the stop inference condition. Therefore, parallel decoding processing may be performed repeatedly on the first processing result through the multiple submodels until the second processing result meets the stop inference condition. Because this solution may monitor both the length of the second processing result and the end identifier, it not only may prevent the model from continuing the decoding processing caused by omission of the end identifier, but also may prevent a problem of semantic incompleteness caused by prematurely stopping the decoding processing of the first processing result.

Exemplary Apparatus

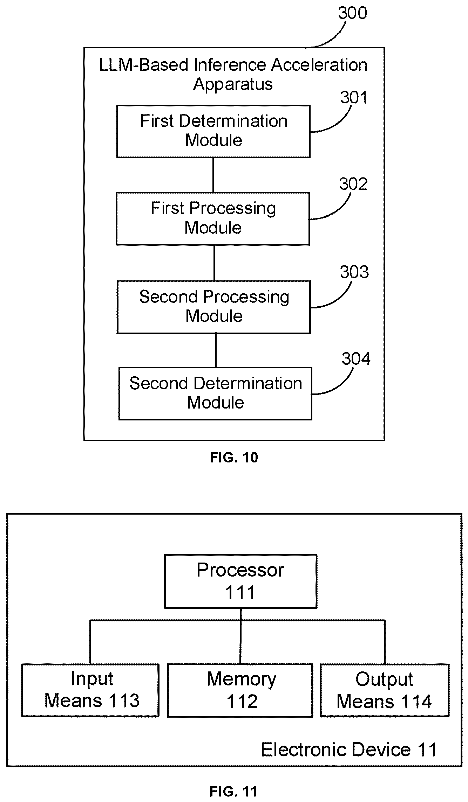

FIG. 10 is a schematic diagram illustrating a structure of an LLM-based inference acceleration apparatus according to an exemplary embodiment of the present disclosure. The inference acceleration apparatus may be disposed in an electronic device such as a terminal device or a server, or on an object such as a vehicle, for performing the LLM-based inference acceleration method in any one of the foregoing embodiments of the present disclosure.

As shown in FIG. 10, the LLM-based inference acceleration apparatus 300 may include:

a first determination module 301, configured for determining LLMs deployed on a plurality of first hardware accelerators, multiple submodels obtained through segmenting the LLMs and respectively deployed on a plurality of second hardware accelerators, and input data of a to-be-executed task;

a first processing module 302, configured for performing first processing on the input data through the plurality of LLMs to obtain a first processing result;

a second processing module 303, configured for performing second processing on the first processing result through the multiple submodels to obtain a second processing result; and

a second determination module 304, configured for determining an execution result of the to-be-executed task in response to the second processing result meeting a stop inference condition.

In a possible implementation, the first processing module 302 may be specifically configured for:

performing encoding processing on the input data to obtain an input sequence;

splitting the input sequence based on a number of the first hardware accelerators, to obtain multiple subsequences equal in number to the first hardware accelerators; and

performing parallel prefilling processing on the multiple subsequences through the plurality of LLMs to obtain the first processing result.

In a possible implementation, the first processing module 302 may be specifically configured for:

performing prefilling processing on a first subsequence among the multiple subsequences sequentially through a plurality of structural layers included in the LLM deployed on a third hardware accelerator, to obtain a first output result and KV pairs of the respective structural layers corresponding to the first subsequence, where the third hardware accelerator is any one of the plurality of first hardware accelerators;

performing, through a plurality of structural layers included in the LLM deployed on a fourth hardware accelerator, prefilling processing on a second subsequence among the multiple subsequences and KV pairs of the respective structural layers corresponding to a previous subsequence for the second subsequence, to obtain a second output result and KV pairs of the respective structural layers corresponding to the second subsequence, where the fourth hardware accelerator is any one of the plurality of first hardware accelerators, which has not performed prefilling processing operation, and the second subsequence is any one of the multiple subsequences other than the first subsequence; and

determining the first processing result based on the first output result and the second output result.

In a possible implementation, the second processing module 303 may be specifically configured for:

performing, through a first structural layer among the plurality of structural layers included in the LLM deployed on the fourth hardware accelerator, prefilling processing on the second subsequence and a KV pair of a first structural layer corresponding to the previous subsequence for the second subsequence, to obtain an output sub-result of the first structural layer corresponding to the fourth hardware accelerator and a KV pair of the first structural layer corresponding to the second subsequence;

performing, through a second structural layer among the plurality of structural layers included in the LLM deployed on the fourth hardware accelerator, prefilling processing on an output sub-result of a previous structural layer for the second structural layer and a KV pair of a structural layer corresponding to the previous subsequence for the second subsequence, to obtain an output sub-result of the second structural layer and a KV pair of the second structural layer, where the second structural layer is any one of the plurality of structural layers included in the LLM deployed on the fourth hardware accelerator other than the first structural layer corresponding to the fourth hardware accelerator; and

determining the second output result based on an output sub-result of a last structural layer among the plurality of structural layers included in the LLM deployed on the fourth hardware accelerator.

In a possible implementation, the multiple submodels respectively deployed on the plurality of second hardware accelerators are obtained by splitting a weight matrix of the LLMs according to a splitting strategy; and the second processing module 303 may be specifically configured for:

performing decoding processing on the first processing result respectively through respective submodels on the second hardware accelerators to obtain inference results corresponding to the respective second hardware accelerators; and

integrating, according to the splitting strategy, the respective inference results corresponding to the second hardware accelerators to determine the second processing result.

In a possible implementation, the second processing module 303 may be specifically configured for:

performing decoding processing on the first processing result through a third structural layer among a plurality of structural layers included in the submodel deployed on each of the second hardware accelerators, to obtain an output result of the third structural layer corresponding to each of the second hardware accelerators;

decoding, through a fourth structural layer among the plurality of structural layers included in the submodel deployed on each of the second hardware accelerators, an output result of a previous structural layer for the fourth structural layer corresponding to each of the second hardware accelerators, to obtain an output result of the fourth structural layer corresponding to each of the second hardware accelerators, where the fourth structural layer is any one of the plurality of structural layers included in the submodel other than the third structural layer; and

determining the inference results corresponding to the respective second hardware accelerators based on output results of last structural layers among the plurality of structural layers included in the respective submodels deployed on the respective second hardware accelerator.

In a possible implementation, the LLM-based inference acceleration apparatus 300 may further include:

a third processing module, configured for: repeatedly performing parallel decoding processing on the first processing result through the multiple submodels until the second processing result meets the stop inference condition, when it is determined that the second processing result does not meet the stop inference condition in response to a length of the second processing result being less than a preset length threshold and no end identifier being detected.

For beneficial technical effects corresponding to the exemplary embodiment of this apparatus, refer to the corresponding beneficial technical effects of the exemplary method section described above, which are not repeated herein.

Exemplary Electronic Device

FIG. 11 is a diagram illustrating a structure of an electronic device according to an embodiment of the present disclosure. The electronic device 11 includes at least one processor 111 and a memory 112.

The processor 111 may be a CPU or another form of processing unit having a data processing capability and/or an instruction execution capability, and may control another component in the electronic device 11 to perform a desired function.

The memory 112 may include one or more computer program products. The computer program product may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. The computer readable storage medium may store one or more computer program instructions. The processor 111 may run the one or more computer program instructions to implement the LLM-based inference acceleration method and/or other desired functions in the foregoing embodiments of the present disclosure.

In an example, the electronic device 11 may further include an input means 113 and an output means 114. The components are interconnected through a bus system and/or other forms of connection mechanisms (not shown).

The input means 113 may include various types of sensors. The sensor includes, but is not limited to: a ranging sensor, configured for detecting a distance between a target object and a vehicle; and an image sensor, configured for collecting information about a surrounding environment of the vehicle. In some examples, the input means may further include a pressure sensor, configured for detecting seat pressure to determine whether there is a passenger and a position of the passenger; a temperature sensor, configured for monitoring a temperature in a cockpit; a humidity sensor, configured for monitoring humidity within a cockpit and assisting in regulating an environment inside the vehicle; an air quality sensor, configured for monitoring quality of air inside the vehicle, such as carbon dioxide or volatile organic compounds (VOCs); a light sensor, configured for detecting light intensity inside and outside the vehicle; an acceleration sensor, configured for detecting changes in acceleration of the vehicle; a distance sensor, configured for detecting a distance between the vehicle and another object; a touchscreen sensor, configured for interacting with an infotainment system of the vehicle; a biometric sensor, configured for performing fingerprint recognition, face recognition, and the like; a heart rate monitor, configured for monitoring a heart rate of a driver; a sound sensor, configured for performing voice recognition and interaction to implement a voice control function; a seat sensor, configured for monitoring usage of a seat, such as whether the seat is occupied, and a body shape of a passenger; and a wireless communication sensor, such as Bluetooth or Wi-Fi, configured for connecting to an intelligent device to implement data transmission and remote control. In addition to the examples given above, the input means may further include more or fewer sensors, which is not described in detail herein.

The output means 114 may output various information or signals to other hardware or devices, which may include a display, an in-vehicle sound system, a seat, a vehicle-window, a steering wheel, and the like, as well as a communication network and a remote output means connected thereto. The display may include a plurality of different display screens, such as a driver seat display screen, a front passenger seat display screen, and a rear passenger seat display screen. The in-vehicle sound system may include a plurality of loudspeakers disposed at different positions in the cockpit of the vehicle. Different display screens or loudspeakers may all work independently.

Certainly, for simplicity, only some components in the electronic device 11 that are related to the present disclosure are shown in FIG. 11, and components such as a bus and an input/output interface are omitted. Besides, the electronic device 11 may further include any other appropriate components depending on specific applications.

Exemplary Computer Program Product And Computer Readable Storage Medium

In addition to the foregoing method and device, the embodiments of the present disclosure may also provide a computer program product including computer program instructions that, when run by a processor, cause the processor to perform the steps of the LLM-based inference acceleration method according to the embodiments of the present disclosure that is described in the "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the LLM-based inference acceleration method according to the embodiments of the present disclosure that is described in the "exemplary method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

**Claims**

1. A large language model (LLM)-based inference acceleration method, **characterized by** comprising:

   determining (201) LLMs deployed on a plurality of first hardware accelerators, multiple submodels obtained through segmenting the LLMs and respectively deployed on a plurality of second hardware accelerators, and input data of a to-be-executed task;
   performing (202) first processing on the input data through the plurality of LLMs to obtain a first processing result;
   performing (203) second processing on the first processing result through the multiple submodels to obtain a second processing result; and determining (204) an execution result of the to-be-executed task in response to the second processing result meeting a stop inference condition.

2. The method according to claim 1, wherein the performing (202) first processing on the input data through the plurality of LLMs to obtain a first processing result comprises:

   performing (2021) encoding processing on the input data to obtain an input sequence;
   splitting (2022) the input sequence based on a number of the first hardware accelerators, to obtain multiple subsequences equal in number to the first hardware accelerators; and
   performing (2023) parallel prefilling processing on the multiple subsequences through the plurality of LLMs to obtain the first processing result.

3. The method according to claim 2, wherein the performing (2023) parallel prefilling processing on the multiple subsequences through the plurality of LLMs to obtain the first processing result comprises:

   performing (2023a) prefilling processing on a first subsequence among the multiple subsequences sequentially through a plurality of structural layers included in the LLM deployed on a third hardware accelerator, to obtain a first output result and key-value (KV) pairs of the respective structural layers corresponding to the first subsequence, wherein the third hardware accelerator is any one of the plurality of first hardware accelerators;
   performing (2023b), through a plurality of structural layers included in the LLM deployed on a fourth hardware accelerator, prefilling processing on a second subsequence among the multiple subsequences and KV pairs of the respective structural layers corresponding to a previous subsequence for the second subsequence, to obtain a second output result and KV pairs of the respective structural layers corresponding to the second subsequence, wherein the fourth hardware accelerator is any one of the plurality of first hardware accelerators, which has not performed prefilling processing operation, and the second subsequence is any one of the multiple subsequences other than the first subsequence; and
   determining (2023c) the first processing result based on the first output result and the second output result.

4. The method according to claim 3, wherein the performing (2023b), through a plurality of structural layers included in the LLM deployed on a fourth hardware accelerator, prefilling processing on a second subsequence among the multiple subsequences and KV pairs of the respective structural layers corresponding to a previous subsequence for the second subsequence, to obtain a second output result and KV pairs of the respective structural layers corresponding to the second subsequence comprises:

performing, through a first structural layer among the plurality of structural layers included in the LLM deployed on the fourth hardware accelerator, prefilling processing on the second subsequence and a KV pair of a first structural layer corresponding to the previous subsequence for the second subsequence, to obtain an output sub-result of the first structural layer corresponding to the fourth hardware accelerator and a KV pair of the first structural layer corresponding to the second subsequence;

performing, through a second structural layer among the plurality of structural layers included in the LLM deployed on the fourth hardware accelerator, prefilling processing on an output sub-result of a previous structural layer for the second structural layer and a KV pair of a structural layer corresponding to the previous subsequence for the second subsequence, to obtain an output sub-result of the second structural layer and a KV pair of the second structural layer, wherein the second structural layer is any one of the plurality of structural layers included in the LLM deployed on the fourth hardware accelerator other than the first structural layer corresponding to the fourth hardware accelerator; and

determining the second output result based on an output sub-result of a last structural layer among the plurality of structural layers included in the LLM deployed on the fourth hardware accelerator.

5. The method according to any one of claims 1 to 4, wherein the multiple submodels respectively deployed on the plurality of second hardware accelerators are obtained by splitting a weight matrix of the LLMs according to a splitting strategy; and
the performing (203) second processing on the first processing result through the multiple submodels to obtain a second processing result comprises:

performing (2031) decoding processing on the first processing result respectively through respective submodels on the second hardware accelerators to obtain inference results corresponding to the respective second hardware accelerators; and

integrating (2032), according to the splitting strategy, the respective inference results corresponding to the second hardware accelerators to determine the second processing result.

6. The method according to claim 5, wherein the performing (2031) decoding processing on the first processing result respectively through respective submodels on the second hardware accelerators to obtain inference results corresponding to the respective second hardware accelerators comprises:

performing decoding processing on the first processing result through a third structural layer among a plurality of structural layers included in the submodel deployed on each of the second hardware accelerators, to obtain an output result of the third structural layer corresponding to each of the second hardware accelerators;

decoding, through a fourth structural layer among the plurality of structural layers included in the submodel deployed on each of the second hardware accelerators, an output result of a previous structural layer for the fourth structural layer corresponding to each of the second hardware accelerators, to obtain an output result of the fourth structural layer corresponding to each of the second hardware accelerators, wherein the fourth structural layer is any one of the plurality of structural layers included in the submodel other than the third structural layer; and

determining the inference results corresponding to the respective second hardware accelerators based on output results of last structural layers among the plurality of structural layers included in the respective submodels deployed on the respective second hardware accelerators.

7. The method according to any one of claims 1 to 6, further comprising:
repeatedly performing (205) parallel decoding processing on the first processing result through the multiple submodels until the second processing result meets the stop inference condition, when it is determined that the second processing result does not meet the stop inference condition in response to a length of the second processing result being less than a preset length threshold and no end identifier being detected, the parallel decoding processing being the second processing.

8. A large language model (LLM)-based inference acceleration apparatus, **characterized by** comprising:

a first determination module (301), configured for determining LLMs deployed on a plurality of first hardware accelerators, multiple submodels obtained through segmenting the LLMs and respectively deployed on a plurality of second hardware accelerators, and input data of a to-be-executed task;

a first processing module (302), configured for performing first processing on the input data through the plurality of LLMs to obtain a first processing result;

a second processing module (303), configured for performing second processing on the first processing result through the multiple submodels to obtain a second processing result; and

a second determination module (304), configured for determining an execution result of the to-be-executed task in response to the second processing result meeting a stop inference condition.

9. The apparatus according to claim 8, wherein the first processing module (302) performs the first processing on the input data through the plurality of LLMs to obtain the first processing result by:

performing encoding processing on the input data to obtain an input sequence;

splitting the input sequence based on a number of the first hardware accelerators, to obtain multiple subsequences equal in number to the first hardware accelerators; and

performing parallel prefilling processing on the multiple subsequences through the plurality of LLMs to obtain the first processing result.

10. The apparatus according to claim 9, wherein the performing parallel prefilling processing on the multiple subsequences through the plurality of LLMs to obtain the first processing result comprises:

performing prefilling processing on a first subsequence among the multiple subsequences sequentially through a plurality of structural layers included in the LLM deployed on a third hardware accelerator, to obtain a first output result and key-value (KV) pairs of the respective structural layers corresponding to the first subsequence, wherein the third hardware accelerator is any one of the plurality of first hardware accelerators;

performing, through a plurality of structural layers included in the LLM deployed on a fourth hardware accelerator, prefilling processing on a second subsequence among the multiple subsequences and KV pairs of the respective structural layers corresponding to a previous subsequence for the second subsequence, to obtain a second output result and KV pairs of the respective structural layers corresponding to the second subsequence, wherein the fourth hardware accelerator is any one of the plurality of first hardware accelerators, which has not performed prefilling processing operation, and the second subsequence is any one of the multiple subsequences other than the first subsequence; and

determining the first processing result based on the first output result and the second output result.

11. The apparatus according to any one of claims 8 to 10, wherein the multiple submodels respectively deployed on the plurality of second hardware accelerators are obtained by splitting a weight matrix of the LLMs according to a splitting strategy; and

the second processing module (303) performs the second processing on the first processing result through the multiple submodels to obtain the second processing result by:

performing decoding processing on the first processing result respectively through respective submodels on the second hardware accelerators to obtain inference results corresponding to the respective second hardware accelerators; and

integrating, according to the splitting strategy, the respective inference results corresponding to the second hardware accelerators to determine the second processing result.

12. The apparatus according to claim 11, wherein the performing decoding processing on the first processing result respectively through respective submodels on the second hardware accelerators to obtain inference results corresponding to the respective second hardware accelerators comprises:

performing decoding processing on the first processing result through a third structural layer among a plurality of structural layers included in the submodel deployed on each of the second hardware accelerators, to obtain an output result of the third structural layer corresponding to each of the second hardware accelerators;

decoding, through a fourth structural layer among the plurality of structural layers included in the submodel deployed on each of the second hardware accelerators, an output result of a previous structural layer for the fourth structural layer corresponding to each of the second hardware accelerators, to obtain an output result of the fourth structural layer corresponding to each of the second hardware accelerators, wherein the fourth structural layer is any one of the plurality of structural layers included in the submodel other than the third structural layer; and

determining the inference results corresponding to the respective second hardware accelerators based on output results of last structural layers among the plurality of structural layers included in the respective submodels deployed on the respective second hardware accelerators.

13. The apparatus according to any one of claims 8 to 12, further comprising:
a third processing module, configured for repeatedly performing (205) parallel decoding processing on the first processing result through the multiple submodels until the second processing result meets the stop inference condition, when it is determined that the second processing result does not meet the stop inference condition in response to a length of the second processing result being less than a preset length threshold and no end identifier being detected, the parallel decoding processing being the second processing.

14. A non-transitory computer readable storage medium, on which a computer program is stored, **characterized by** that the computer program, when executed by a processor, causes the processor to implement the LLM-based inference acceleration method according to any one of claims 1 to 7.

15. An electronic device (11), **characterized by** comprising:

a processor (111); and
a memory (112), configured for storing instructions executable by the processor (111), wherein the processor (111) is configured for reading the instructions from the memory (112), and executing the instructions to implement the LLM-based inference acceleration method according to any one of claims 1 to 7.

```
        ┌──────────┐
        │  Input   │
        │  Module  │
        └──────────┘
             │
             ▼
   ┌────────────────────┐
   │ Prefilling Parallel│
   │       Module       │
   └────────────────────┘
             │
             ▼
   ┌────────────────────┐        No
   │      Decoding      │◄─────────────┐
   │   Parallel Module  │              │
   └────────────────────┘              │
             │                         │
             ▼                         │
          ╱─────╲                      │
      ╱─────────────╲                  │
   ╱ Stop Generating  ╲────────────────┘
   ╲ Decision Module  ╱
      ╲─────────────╱
          ╲─────╱
             │  Yes
             ▼
   ┌────────────────────┐
   │        End         │
   └────────────────────┘
```

FIG. 1

determining LLMs deployed on a plurality of first hardware accelerators, multiple submodels obtained through segmenting the LLMs and respectively deployed on a plurality of second hardware accelerators, and input data of a to-be-executed task — 201

performing first processing on the input data through the plurality of LLMs to obtain a first processing result — 202

performing second processing on the first processing result through the multiple submodels to obtain a second processing result — 203

determining an execution result of the to-be-executed task in response to the second processing result meeting a stop inference condition — 204

**FIG. 2**

— 202

performing encoding processing on the input data to obtain an input sequence — 2021

splitting the input sequence based on a number of the first hardware accelerators, to obtain multiple subsequences equal in number to the first hardware accelerators — 2022

performing parallel prefilling processing on the multiple subsequences through the plurality of LLMs to obtain the first processing result — 2023

**FIG. 3**

First Processing Result

Second Output Result

First Output Result

02

01

KV cache

Layer n

Layer n

Layer n-1

Layer n-1

KV cache

...

...

KV cache

Layer 2

Layer 2

KV cache

Layer 1

Layer 1

X1

X2

| t1 | t2 | t3 | t4 | t5 | t6 | t7 | t8 |

FIG. 4

203

performing decoding processing on the first processing result respectively through respective submodels on the second hardware accelerators to obtain inference results corresponding to the respective second hardware accelerators — 2031

integrating, according to the splitting strategy, the respective inference results corresponding to the second hardware accelerators to determine the second processing result — 2032

**FIG. 5**

GPU1

W1 ⊗ X = Y1

GPU2

W2 ⊗ X = Y2

**FIG. 6**

W ⊗ X = Y

**FIG. 7**

Second Output Result

GPU1

Layer n* $W^1_n$     all-to- all     Layer n* $W^2_n$

Layer n-1* $W^1_{n-1}$     all-to- all     Layer n-1* $W^2_{n-1}$

...     ...

Layer 2* $W^1_2$     all-to- all     Layer 2* $W^2_2$

Layer 1* $W^1_1$     all-to- all     Layer 1* $W^2_1$

GPU2

First Output Result

FIG. 8

determining LLMs deployed on a plurality of first hardware accelerators, multiple submodels obtained through segmenting the LLMs and respectively deployed on a plurality of second hardware accelerators, and input data of a to-be-executed task ⌐ 201

performing first processing on the input data through the plurality of LLMs to obtain a first processing result ⌐ 202

performing second processing on the first processing result through the multiple submodels to obtain a second processing result ⌐ 203

determining an execution result of the to-be-executed task in response to the second processing result meeting a stop inference condition ⌐ 204

repeatedly performing parallel decoding processing on the first processing result through the multiple submodels until the second processing result meets the stop inference condition, when it is determined that the second processing result does not meet the stop inference condition in response to a length of the second processing result being less than a preset length threshold and no end identifier being detected ⌐ 205

**FIG. 9**

300

LLM-Based Inference Acceleration
Apparatus

301
First Determination
Module

302
First Processing
Module

303
Second Processing
Module

304
Second Determination
Module

FIG. 10

Processor
111

Input
Means 113

Memory
112

Output
Means 114

Electronic Device 11

FIG. 11

Europäisches Patentamt / European Patent Office / Office européen des brevets

# EUROPEAN SEARCH REPORT

**Application Number**

EP 25 20 4218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YINMIN ZHONG ET AL: "DistServe: Disaggregating Prefill and Decoding for Goodput-optimized Large Language Model Serving", ARXIV.ORG, CORNELL UNIVERSITY LIBRARY, 201 OLIN LIBRARY CORNELL UNIVERSITY ITHACA, NY 14853, 6 June 2024 (2024-06-06), XP091777338, | 1,7,8, 13-15 | INV. G06N3/045 G06N3/063 |
| Y | * the whole document * | 2-6,9-12 | |
| Y | AMY YANG ET AL: "Context Parallelism for Scalable Million-Token Inference", ARXIV.ORG, CORNELL UNIVERSITY LIBRARY, 201 OLIN LIBRARY CORNELL UNIVERSITY ITHACA, NY 14853, 21 April 2025 (2025-04-21), XP091999069, * the whole document * | 2-4,9,10 | |
| Y | DEEPAK NARAYANAN ET AL: "Efficient Large-Scale Language Model Training on GPU Clusters Using Megatron-LM", ARXIV.ORG, CORNELL UNIVERSITY LIBRARY, 201 OLIN LIBRARY CORNELL UNIVERSITY ITHACA, NY 14853, 15 August 2021 (2021-08-15), XP091025395, * the whole document * | 5,6,11, 12 | |
| A | QIN RUOYU ET AL: "MOONCAKE: Trading More Storage for Less Computation -A KVCache-centric Architecture for Serving LLM Chatbot", , 27 February 2025 (2025-02-27), XP093358922, Retrieved from the Internet: URL:https://www.usenix.org/system/files/fast25-qin.pdf> * the whole document * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 29 January 2026 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)